(19) **Europäisches Patentamt**
**European Patent Office**
**Office européen des brevets**

(11) **EP 1 166 516 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(21) Anmeldenummer: **00929244.2**

(22) Anmeldetag: **28.03.2000**

(51) Int Cl.:
***H04L 27/26*** *(2006.01)*

(86) Internationale Anmeldenummer:
**PCT/DE2000/000915**

(87) Internationale Veröffentlichungsnummer:
**WO 2000/060805 (12.10.2000 Gazette 2000/41)**

(54) **VERFAHREN ZUR SYNCHRONISATION**

METHOD FOR SYNCHRONISATION

PROCEDE DE SYNCHRONISATION

(84) Benannte Vertragsstaaten:
**DE FI FR GB SE**

(30) Priorität: **30.03.1999 DE 19914600**

(43) Veröffentlichungstag der Anmeldung:
**02.01.2002 Patentblatt 2002/01**

(73) Patentinhaber: **ROBERT BOSCH GMBH**
**70442 Stuttgart (DE)**

(72) Erfinder:
• **RADIMIRSCH, Markus**
**D-30880 Laatzen (DE)**
• **BRUENINGHAUS, Karsten**
**D-38259 Salzgitter (DE)**
• **LUEBBERT, Urs**
**D-21224 Rosengarten (DE)**

(56) Entgegenhaltungen:
**EP-A- 0 529 421**   **WO-A-96/02990**
**DE-A- 4 446 639**   **US-A- 5 732 113**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einem verfahren zur Synchronisation eines oder mehrerer Empfänger auf einen Sender innerhalb eines Übertragungssystems unter Verwendung eines Datenstromes mit Schutzintervallen insbesondere für den Ausgleich von Mehrwegeausbreitung sowie von einem Sender zur Aufbereitung einer Synchronisationsfolge und einem Empfänger zur Auswertung dieser Synchronisationsfolge und einem Kommunikationssystem.

Es wird beispielsweise davon ausgegangen, daß ein Sender einen oder mehrere Empfänger bedient. Der Sender sendet zu einem Zeitpunkt ein oder mehrere Pakete an die Empfänger.

In einem Übertragungssystem, welches insbesondere OFDM (Orthogonal Frequency Division Multiplexing) verwendet, stellt sich das Problem der Synchronisation. Bei der OFDM-Übertragung werden die Sendesymbole auf mehrere Unterträger im Frequenzbereich durch eine im allgemeinen digitale Modulationsart aufmoduliert [1]. Die Unterträger werden dann in Summe mit einer IFFT (Inverse Fast Fourier Transformation) in den Zeitbereich transformiert und anschließend ausgesendet.

Im Empfänger ist es notwendig einige Informationen über das gesendete Signal zu rekonstruieren, insbesondere den Blockbeginn und die Frequenzablage.

Zur Ermittlung des Blockbeginns muß die zeitliche Lage des zu empfangenden Signals bekannt sein. Für diesen Zweck wird meist ein zweistufiges Verfahren verwendet, demgemäß zuerst eine grobe und anschließend eine feine Detektion des Blockbeginns nacheinander durchgeführt werden.

Im Normalfall hat der Empfänger eine Frequenzablage gegenüber dem Sender. Im Falle von OFDM ist diese Ablage besonders kritisch, weil es dadurch zu einer Störung der Orthogonalität kommen kann, die zu erhöhten Bitfehlern führt. Die Frequenzsynchronisation dient dazu, diese Frequenzdifferenz zu korrigieren.

Um in einem Kommunikationssystem mit Übertragung relativ kurzer Datenpakete eine Synchronisation zu erreichen, werden einem Übertragungsburst gemäß [2], [3] und [4] zwei identische Synchronisationssymbole, insbesondere OFDM-symbole vorangestellt, die zweimal mit einem vorgegebenen Abstand ausgesendet werden. Die Position dieser Signale kann durch Auswertung der Metrik bestimmt werden.

Zur Vermeidung von Tntersymbol-Interferenzen (ISI) wird im Zusammenhang mit der OFDM-Übertragungstechnik häufig ein Schutzintervall im Sender eingefügt, dessen Länge an die Dauer der Kanalimpulsantwort angepaßt ist. Damit im Empfänger auch tatsächlich keine Störung durch zeitlich benachbarte Symbole auftreten, muß der Einschwingzeitpunkt, das heißt der Beginn des ISI-freien Signalabschnittes, vor der Datenauswertung im Empfänger ermittelt werden. Die Ermittlung dieses Zeitpunktes wird als Block- oder Symbolsynchronisation bezeichnet. Wenn die Impulsantwort des vorliegenden Kanals kürzer ist als das Schutzintervall, muss die Blocksynchronisation nicht genau den Beginn des eingeschwungenen Zustands ermitteln, sondern es ergibt sich ein zulässiges Synchronisationsintervall.

Aus der US-A-5,732,113 ist ein Empfänger zum Empfang und zur Synchronisation eines OFDM-Datenstroms mit Schutzintervallen bekannt, der einen Abtastspeicher für einen empfangenen Datenstrom und eine Synchronisationsauswerteeinrichtung zur Ermittlung der zeitlichen Lage des empfangenen Signals aus einem Verbundterm aus zwei verschiedenen Symbolsequenzen innerhalb eines vorgegebenen Intervalls aufweist.

die WO-A-9602990 weist ebenfalls eine Synchronisationseinrichtung für einen OFDM-Datenstrom auf. Chirp-Signale in benachbarten Datenrahmen werden zur Synchronisation benutzt. Der Empfänger umfasst einen Speicher, der ein gespeichertes Bitmuster enthält, das mit den Chirp-Signalen korrespondiert und mit den decodierten Empfangsdaten zur Synchronisation verglichen wird.

Vorteile der Erfindung

Mit den Maßnahmen gemäß Anspruch 1 lässt sich die Genauigkeit der Synchronisation gegenüber bekannten Verfahren wesentlich verbessern. Während die bekannten Verfahren eigentlich nur zu einer groben Blocksynchronisation verwendbar sind, liefert das Verfahren nach der Erfindung recht genaue Ergebnisse sowohl hinsichtlich einer feinen Block- als auch einer Frequenzschätzung. Die erfindungsgemäße Lösung eignet sich vorteilhaft für OFDM als Übertragungsverfahren. Wenn eine kohärente Demodulation vorgesehen ist, kann die Synchronisationsfolge zur Blocksynchronisation und Schätzung der Frequenzablage auch zur Schätzung der Kanalimpulsantwort verwendet werden.

Der Implementierungsaufwand für das Verfahren nach der Erfindung ist kaum höher als bei bekannten Verfahren, liefert aber eine erhöhte Genauigkeit der Schätzung insbesondere der Frequenzablage.

Das Verfahren nach der Erfindung bzw. ein entsprechendes Kommunikationssystem eignet sich vorteilhaft zum Einsatz in Funksystemen, und zwar in normalen bidirektionalen Kommunikationssystemen mit variabler Rollenverteilung von Sender und Empfänger als auch in Rundstrahlsystemen, in denen die Rollen von Sender und Empfänger statisch über der Zeit sind.

Als Übertragungsmedium kann außer Funk auch eine Ieitungsgebundene Übertragung vorgesehen sein, beispielsweise über Koaxialkabel oder über geschirmte oder ungeschirmte Adernpaare eines Leitungsnetzes. Auch in Hybridkommunikationssystemen, daß heißt mit Funkkomponenten, leitungsgebundenen Komponenten und/oder Lichtquellenleiter-Komponenten, ist die Erfindung vorteilhaft einsetzbar.

Als Modulationsart eignet sich insbesondere OFDM. Aber auch in Systemen ohne OFDM, wo Übertragungsverfahren verwendet werden, in denen ein Schutzintervall für den Ausgleich von Mehrwegeausbreitung vorgesehen ist, kann die Erfindung vorteilhaft zum Einsatz kommen.

Zeichnungen

Anhand der Zeichnungen werden Ausführungsbeispiele näher erläutert. Es zeigen:

Figur 1 ein Funknetz mit einem Sender und mehreren Empfängern,
Figur 2 den Aufbau einer Synchronisationsfolge nach dem Stand der Technik,
Figur 3 den Aufbau einer Synchrcnisationsfolge nach der Erfindung,
Figur 4 den Aufbau einer Synchronisationsfolge mit Präambel,
Figur 5 ein Blockschaltbild eines Senders nach der Erfindung,
Figur 6 ein Blockschaltbild eines Empfängers nach der Erfindung.

Beschreibung von Ausführungsbeispielen

Bevor auf die eigentliche erfindungsgemäße Realisierung eingegangen wird, wird zum besseren Verständnis die Synchronisation nach dem Stand der Technik erläutert.

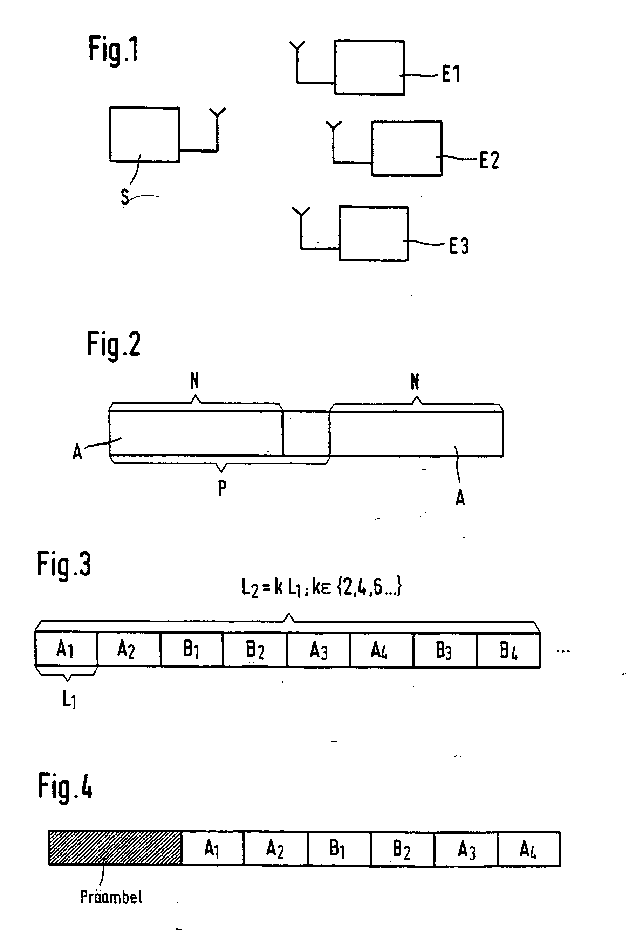

Es wird für die folgenden Betrachtungen davon ausgegangen, daß gemäß Figur 1 ein Sender S eines Teilnehmers mehrere Empfänger E1, E2, E3 anderer Teilnehmer bedient.

Der Sender S eines Teilnehmers sendet im Moment ein oder mehrere Datenpakte an die Empfänger E1, E2, E3, deren Dauer konstant oder variabel sein kann. Die Situation kann sich allgemein auch derart ändern, daß dynamisch einer der Teilnehmer vom Empfangsbetrieb später auf Sendebetrieb umschaltet und ein sendender Teilnehmer und/ oder die anderen empfangenden Teilnehmer dann im Empfangsbetrieb arbeiten.

Es wird weiter davon ausgegangen, daß als Übertragungsverfahren OFDM verwendet wird, vergleiche [1], [3], [4]. Dazu werden die Sendeymbole auf mehrere Unterträger im Frequenzbereich durch eine im allgemeinen digitale Modulationsart aufmoduliert. Die Unterträger werden dann in Summe mit einer IFFT (Inverse Fast Fourier Transformation) in den Zeitbereich transformiert und anschließend ausgesendet.

Da in einem Kommunikationssystem nur kurze Datenpakete übertragen werden, ist eine schnelle Synchronisation dringend erforderlich. Dies ist nur mit Hilfe eines speziellen Synchronisationssymbols zu erreichen, das dem Datenpaket im Sender vorangestellt wird.

Ein bekanntes Verfahren zur Blocksynchronisation, vergleiche [2] und [3], ist die Auswertung eines Signals A = $\{r_i\}$ der Länge N, das zweimal mit dem Abstand P versendet wird, siehe Figur 2. Die Position dieses Signals kann durch Auswertung der Metrik:

$$\lambda(i,N,P) = \min_{\varphi}\left\{\sum_{j=0}^{N-1}\left|r(i+j) - r(i+j+P)e^{j\varphi}\right|^2\right\}$$

$$= \min_{\varphi}\left\{\sum_{j=0}^{N-1}\left|r(i+j)\right|^2 + \left|r(i+j+P)\right|^2 - 2\mathrm{Re}\left\{r(i+j)r^*(i+j+P)e^{-j\varphi}\right\}\right\}$$

$$= \sum_{j=0}^{N-1}\left[\left|r(i+j)\right|^2 + \left|r(i+j+P)\right|^2\right] - 2\left|\sum_{j=0}^{N-1} r(i+j)r^*(i+j+P)\right|$$

$$= E(i,N,P) - 2\left|w(i,N,P)\right|$$

bestimmt werden.

Das Kriterium für den Blockbeginn ist gegeben durch den-Index i, bei dem die Metrik ihre minimale Phase aufweist:

$$i_{start} = \arg\min_i \lambda(i, N, P)$$

Die Blocksynchronisation im OFDM-System soll anhand der periodischen Präambel auf den interferenzfreien Bereich der folgenden Datenblöcke schließen. Dazu wird das Korrelationsfenster gegenüber der Sequenzlänge um die Länge des Schutzintervalls verkürzt.

Dieses zuvor beschriebene Verfahren wird eigentlich zur groben Bloksynchronisation verwendet. Daher liefert es prinzipbedingt nur recht ungenau Ergebnisse sowohl hinsichtlich einer feinen Block- als auch Frequenzschätzung.

Der Sender S gemäß Figur 1 fügt eine spezielle Synchronisationsfolge insbesondere zu Beginn der Aussendung in den Datenstrom ein, die im Empfänger dazu dient, die zeitliche Lage des zu empfangenden Signals und/oder die Frequenzablage zwischen Sender und Empfänger zu schätzen. Die Synchronisationsfolge wird erfindungsgemäß folgendermaßen gebildet:

-   es werden zwei verschiedene Symbolsequenzen A und B gleicher Länge $L_1$ mit idealerweise günstigen Autokorrelations-Eigenschaften ausgewählt. Im Falle von OFDM können dies OFDM-Symbole sein, die die gleiche oder verschiedene Länge wie ein normales Datensymbol haben,

-   die beiden Symbolsequenzen A und B werden immer so ausgesendet, das abwechselnd zweimal A und zweimal B ausgesendet wird, gemäß Figur 3. Die Indizes bei den Symbolsequenzen A und B bezeichnen dabei das Auftreten der Folgen A und B.

Die zeitliche Lage des zu empfangenden Signals zwischen Sender S und Empfänger E wird aus einem Verbundterm, insbesondere der Gesamtmetrik, der verschiedenen Symbolsequenzen, hier der Symbolsequenzpaare innerhalb eines vorgegebenen Intervalls, ermittelt.

Dann ergibt sich im Empfänger die Gesamtmetrik $\lambda_s$ aus der Summe der Einzelmetriken $\lambda$ über alle gleichartigen Sequenzpaare $(A_l, A_m)$ bzw. $(B_l, B_m)$ mit $1 \le 1, m \le M$ und $m > 1$ zu:

$$\lambda_S(i) = \sum_{(A_l,A_m)\in M_A} \lambda(i + S(A_l,A_m), L_1, \Delta(A_l,A_m)) + \cdot \sum_{(B_l,B_m)\in M_B} \lambda(i + S(B_l,B_m), L_1, \Delta(B_l,B_m))$$

In dieser Gleichung bezeichnet S (X,Y) den relativen Startindex für das Signalintervall X und $\Delta$ (X,Y) den Abstand der beiden Signalpaare X,Y.

Es wird derjenige Index i $_{stert}$ als Blockbeginn ausgewählt, der die Metrik $\lambda_s$ innerhalb eines von der Rahmensynchronisation vorgegebenen Intervalls $I_{RS}$ minimiert:

$$i_{start} = \arg\min_{i \in I_{RS}} \lambda_S(i)$$

Bei der Frequenzschätzung ergibt sich das Problem, daß die Phasendrehung zwischen zwei gleichartigen Symbolen $(A_l, A_m)$ bzw. $(B_l, B_m)$ 350° überschreiten kann, so daß die resultierende Vieldeutigkeit zunächst aufgelöst werden muß. Als Referenzfrequens fref hierfür kann die geschätzte Frequenzlage $f_c$ aus der Phasendrehung $\hat{\varphi}_{01}$ jeweils zwei benachbarter periodischer Abschnitte herangezogen werden, da hier der Fangbereich mit $|f_o| < f_a / (\pi L_1)$ am größten ist, wobei

$$\hat{f}_{ref} = \hat{f}_{01} = \frac{\hat{f}_a \cdot \hat{\varphi}_{01}}{2\pi L_1}$$

mit

$$\hat{\varphi}_{o1} = \arg\left\{ \sum_{l=1,3,5,\ldots}^{M-1} w(i_{start} + S(A_l, A_{l+1}), L_1, L_1) + w(i_{start} + S(B_l, B_{l+1}), L_1, L_1) \right\}.$$

Um eine möglichst sichere Frequenzschätzung zu erzielen, sollten auch hier die Phasendrehungen auf allen anderen Intervall-Paaren $(A_l, A_m)$ bzw. $(B_l, B_m)$ berücksichtigt werden. Seien $M_{A\delta} \subset M_A$ und $M_{B\delta} \subset M_B$ die Menge aller Paare $(A_l, A_m)$ bzw. $B_l, B_m)$ mit gleichem Abstand $\Delta (A_l, A_m)$ bzw. $\Delta (B_l, B_m)$ und sei $\delta_{Amax}$ die Anzahl unterschiedlicher Mengen $M_{A(B\delta l)}$ dann ergibt sich insgesamt für den Schätzwert der Frequenzablage $f_0$:

$$\hat{f}_0 = \sum_{\delta=1}^{\delta_{max}} c_\delta \cdot \hat{f}_{o\delta} = \sum_{\delta=1}^{\delta_{max}} c_\delta \frac{f_0 \cdot \hat{\varphi}_{o\delta} \cdot e^{-j V(\hat{\varphi}_{o1}, \hat{\varphi}_{o\delta})}}{2\pi\delta(A_l, A_m \equiv M_{A\delta})}$$

wobei

$$\hat{\varphi}_{o\delta} = \arg\left\{ \sum_{(A_l, A_l) \in M_{A\delta}} w(i_{start} + S(A_l, A_m), L_1, \Delta(A_l, A_m)) + \sum_{(B_l, B_l) \in M_{B\delta}} w(i_{start} + S(B_l, B_m), L_1, \Delta(B_l, B_m)) \right\}$$

Die Koeffizienten $c_\delta$ sind Wichtunsfaktoren, mit denen die unterschiedlichen Rauschleistungen, die den Phasenschätzwerten überlagert sind, berücksichtigt werden. Sie ergeben sich einerseits aus der Anzahl Sequenzpaare, die berücksichtigt werden, andererseits aus dem Abstand (X,Y) der Frequenzpaare. Die Funktion $v(\hat{\varphi}_{ol}, \hat{\varphi}_{o\delta})$ löst die Vieldeutigkeit der Phase $\hat{\varphi}_{o\delta}, \delta>1$ anhand des zuvor ermittelten Phasenschätzwertes $\hat{\varphi}_{ol}$ auf.

Die angegebenen Symbole können erfindungsgemäß auch zur Kanalschätzung herangezogen werden, wenn sie im sendet und Empfänger bekannt sind. Zu diesem Zweck werden die Synchronisationssymbole nach erfolgter Frequenzkorrektur im Empfänger FFT-prozessiert und die Amplituden- und Phasengewichte der einzelnen Unterträger bestimmt. Wenn die Synchronsignale (A bzw. B) kürzer sind als ein normales OFDM-Symbol, müssen die Phasen- und Amplitudengewichte der nicht übertragenen Unterträger durch Interpolation ermittelt werden. Die Tatsache, daß mehrere bekannte Synchronsymbole verwendet werden, kann dazu ausgenutzt werden, eine Mitteilung der Kanalparameter über die bekannten Symbole durchzuführen, um damit die Genauigkeit der Kanalschätzung zu erhöhen.

Es soll nun angenommen werden, daß der Sender jeder Synchronisationsfolge eine Präambel nach Figur 4 voranstellt. Der erfindungsgemäßen Synchronisationsfolge wird eine Präambel vorangestellt, die dazu dient, die Gain control des Empfängers richtig einzustellen, um die Analog-Digital-Umsetzer im Empfänger voll auszusteuern. Das sich anschließende Synchronisationssymbol besteht aus der Sequenz AABBAA.

Die Metrik für die Blocksynchronisation wird in diesem Fall folgendermaßen berechnet:

$$\lambda_S(i) = \lambda(i, L_1, L_1) + \lambda(i, L_1, 4L_1) + \lambda(i, L_1, 5L_1) + \lambda(i + L_1, L_1, 3L_1)$$
$$+ \lambda(i + L_1, L_1, 4L_1) + \lambda(i + 4L_1, L_1, L_1) + \lambda(i + 2L_1, L_1, L_1)$$

Die Einzelmetriken entsprechen den Paaren $(A_1, A_2)$ $(A_1, A_3)$ $(A_1, A_4)$, $(A_2, A_3)$, $(A_2, A_4)$, $(A_3, A_4)$, $(B_1, B_2)$ Der Startwert für den Block ist:

$$i_{start} = \arg \min_i \lambda_S(i)$$

Für die Frequenzsynchronisation wird die Frequensablage $f_0$ folgendermaßen berechnet:

5

$$\hat{\varphi}_{01} = \arg\left\{w(i_{start}, L_1, L_1) + w(i_{start} + 2L_1, L_1, L_1) + w(i_{start} + 4L_1, L_1, L_1)\right\},$$

$$\hat{\varphi}_{02} = \arg\left\{w(i_{start}, L_1, 4L_1) + w(i_{start} + L_1, L_1, 4L_1)\right\}$$

$$\hat{f}_0 = \frac{f_a}{2\pi}\left(c_1 \frac{\hat{\varphi}_{01}}{L_1} + c_2 \frac{\hat{\varphi}_{02} e^{-jV(\hat{\varphi}_{01}, \hat{\varphi}_{02})}}{4L_1}\right)$$

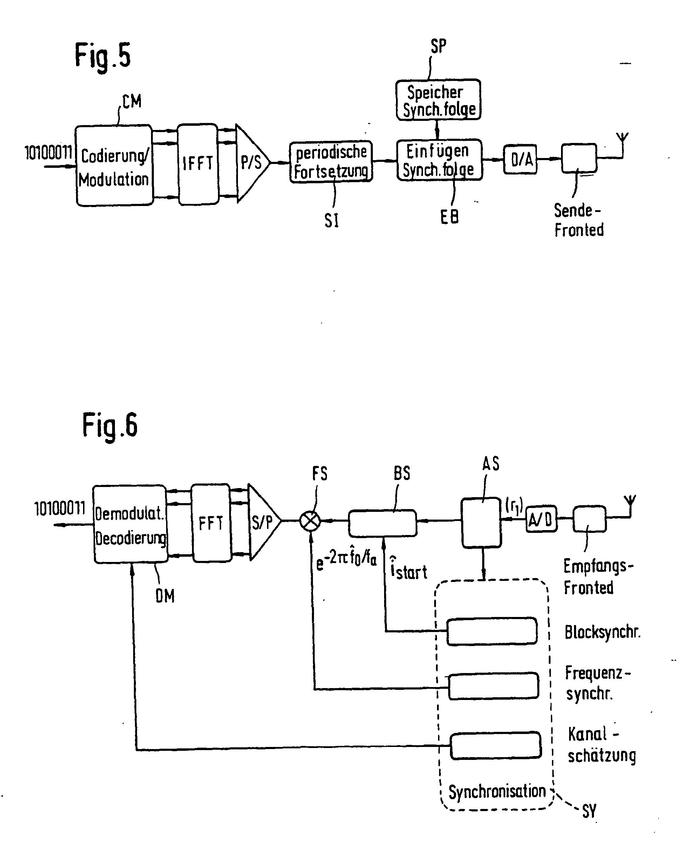

Eine mögliche Realisierung des Senders ist in Figur 5 gezeigt. Ein OFDM-Sander, das heißt dessen Codier- bzw. Modulationseinrichtung CM, wird mit einer Bitfolge gespeist. Es folgt die übliche Prozessierung mit IFFT (Inverse Fast Fourier Transformation), parallel-seriell Wandlung P/S sowie das Einfügen des Schutzintervalls SI durch periodische Fortsetzung (vergleiche [1]). Anschließend wird zu Beginn einer jeden Aussendung die Synchronisationsfolge aus einem Speicher SP ausgelesen und zusammen mit der Präambel nach Figur 4 mittels der Einblendeinrichtung EB eingefügt. Das Signal wird digital-analog (D/A) umgesetzt und dem Sendefrontend SF übergeben, wo es gegebenenfalls in eine andere Frequenzlage hochgemischt und über eine Antenne ausgesendet wird. Das Einfügen der Synchronisationsfolge geschieht in der Realisierung in Figur 5 nach der IFFT, so daß im Speicher SP das Zeitsignal der Synchronisationsfolge vorliegen muß. Unter bestimmten Bedingungen ist es aber genauso gut möglich, die Synchronisationfolge vor der IFFT einzufügen und durch die IFFT prozessieren zu lassen.

Eine mögliche Realisierung des Empfängers ist in Figur 6 gezeigt. Im Empfänger gelangt das ins Basisbrand gemischte und analog-digital umgesetzte Signal in einen Abtastspeicher AS. Auf diesen Abtastspeicher AS kann die Synchronisationsvorrichtung SY zugreifen, um die Blocksynchronisation, Frequenzsynchronisation und Kanalschätzung durchzuführen. Nach erfolgreicher Blocksychronisation wird eine Fensterungseinheit BS angesprochen, die die richtigen Werte aus dem Abtastpufferspeicher liest. Anschließend wird eine Frequenzkorrektur in der Mischeinrichtung FS mit der ermittelten Frequenzablage durchgeführt. Nach der seriellparallel Umsetzung S/P und der FFT-Prozessierung werden die von der Kanalschätzung ermittelten Kanalparameter zur Demodulation und Dekorierung DM verwendet.

Nachfolgend werden Alternativen zur Realisierung des erfindunsgemäßen Verfahrens vorgestellt:

-   Beim Berechnungsverfahren für die Gesamtmetrik ist es auch möglich, nicht alle möglichen Paare zu berücksichtigen. Im Ausführungsbeispiel würde sich die Berechnungvorschrift für die Blocksynchronisation beispielsweise folgendermaßen ändern:

$$\lambda_S(i) = \lambda(i, L_1, L_1) + \lambda(i, L_1, 4L_1) + \lambda(i + L_1, L_1, 4L_1) + \lambda(i + 4L_1, L_1, L_1) + \lambda(i + 2L_1, L_1, L_1)$$

Die Einzelmetriken würden in diesem Fall den Paaren $(A_l, A_2)$, $(A_1, A_3)$, $(A_2, A_4)$, $(A_2, A_4)$, $(B_1, B_2)$ entsprechen. Gleichermaßen ist es möglich, beim Berechnungsverfahren für die Frequenzablage nur einen Teil der möglichen Winkelablagen bei der Berechnung der Gleichung für $\varphi_{0\delta}$ zu verwenden.

-   Es ist unter Umständen günstig, Schutzintervalle vor den einzelnen Frequenzpaaren einzufügen. Wenn S ein Schutzintervall beliebiger Länge ist (im allgemeinen die periodische Fortsetzung eines Symbols), ergibt sich damit beispielhaft die Folge SAASBBSAA. Die oben beschriebenen Berechnungsvorschriften gelten sinngemäß, wobei die Schutzintervalle nicht ausgewertet werden.

-   Gemäß dem zuvor beschriebenen Verfahren werden die Signalfolgen A und B jeweils paarweise mehrere Male nacheinander versendet. Die Verfahren für Block- und Frequenzsynchronisation lassen sich analog auch verwenden, wenn die Signalfolgen einzeln hintereinander folgen, zum Beispiel die Folge ABAB. Ebenso ist es möglich, die Folgen A und B nicht paarweise, sondern jeweils mehr als zweimal einzufügen. Eine beispielhafte Folge für je dreifache Auftreten wäre AAABBBAAA. Die oben angegebenen Berechnungvorschriften sinngemäß.

Darüherhinaus ist es möglich, mehr als zwei verschiedene Signalfolgen zu verwenden, beispielsweise 3 verschiedene Signalfolgen A, B und C. Die Regel in diesem Fall wäre, daß mindestens eine Signalfolge als Paar mit einem Abstand von mehr als einem weiteren Paar anderer Signalfolge zum Synchronsymbol zusammengesetzt werden.

Es ist auch möglich, die verschiedenen Signalfolge nicht direkt hintereinander, sondern mit einem gewissen Abstand voneinander auszusenden.

Das vorgestellte Verfahren geht davon aus, daß die verschiedenen Signalfolgen jeweils die gleiche Länge haben.

Es ist auch möglich, verschiedene Signalfolgen A und B zu verwenden, die verschiedene Länge haben. Die Berechnungsvorschriften gelten sinngemäß und müssen im Detail für diesen Zweck angepaßt werden.

Literatur:

[1] W. Zou, Y.Wu, "COFDM: an Overview", IEEE Transactions on Broadcasting, Vol 41, No. 1, März 1995
[2] Chevillat, P.R., Mainwald, D,. Ungerboeck, G. (1987) Rapid Training of a Voiceband Data-Modem Receiver Employing an Equalizer with Fractional-T Spaced Coefficients, IEEE Trans.on Communications 35(9), 869-876
[3] Müller-Weinfurtner, S.H. (1998) On the Optimality of Metrics for Coarse Frame Synchronization in OFDM a Comparison, 9th IEEE PIMRC'98
[4] Müller-Weinfurtner, S.H., Rößler, J.F., Huber, J.B. (1998) Analysis of a Frame- and Freguency Synchronizer for Bursty OFDM, Proceedings of the 7th CTMC at IEEE Globecom '98, pp.201-206

**Patentansprüche**

1. Verfahren zur Synchronisation eines oder mehrerer Empfänger auf einen Sender innerhalb eines Überrragungsystems unter Verwendung eines Datenstromes mit Schutzintervallen mit folgenden Maßnahmen:

   - Der Sender (S) fügt eine spezielle Synchronisationsfolge in den Datenstrom insbesondere zu Beginn der Aussendung ein, die dazu geeignet ist, die zeitliche Lage des zu empfangenden Signals und/oder die Frequenzablage zwischen Sender (S) und Empfänger (E) zu schätzen,
   - die Synchronisationsfolge wird aus mindestens zwei verschiedenen Symbolsequenzen (A, B) gebildet, die abwechselnd periodisch ausgesendet werden,
   - die zeitliche Lage des zu empfangenden Signals und/oder die Frequenzablage zwischen Sender (S) und Empfänger (E) wird aus einem Verbundterm der verschiedenen Symbolsequenzen (A, B) innerhalb eines vorgegebenen Intervalls ermittelt,
   - zu einer Blocksynchronisation wird die Gesamtmetrik der als Synchronisationsfolge verwendeten mindestens zwei unterschiedlichen Symbolsequenzen herangezogen und als Blockbeginn derjenige Index ausgewählt, der die Gesamtmetrik innerhalb des vorgegebenen Intervalls minimiert.

2. Verfahren nach Anspruch 1, **dadurch gekennzeichnet, daß** bei einem OFDM-Übertragungsystern die Symbolsequenzen (A, B) aus OFDM-Symbolen bestehen, die gleiche oder verschiedene Längen wie ein übliches Datensymbol haben.

3. Verfahren nach Anspruch 1 oder 2, **dadurch gekennzeichnet, das** die Symbolsequenzen (A, B) mindestens paarweise jeweils abwechselnd gesendet werden.

4. Verfahren nach Anspruch 1 oder 2, **dadurch gekennzeichnet, daß** bei mehr als zwei verschiedenen Symbolsequenzen mindestens eine Symbolsequenz als Paar mit einem Abstand von mindestens einem weiteren Paar einer anderen Symbolsequenz zur Synchronisationsfolge zusammengesetzt wird.

5. Verfahren nach Anspruch 3 oder 4, **dadurch gekennzeichnet, daß** Schutzintervalle vor den einzelnen Symbolsequenzpaaren (AA, BB, AA,...) vorgesehen sind.

6. Verfahren nach einem der Ansprüche 1 bis 5, **dadurch gekennzeichnet, daß** zu einer Blocksynchronisation die Gesamtmetrik der als Synchronisationsfolge verwendeten Symbolsequenzen herangezogen wird und als Blockbeginn derjenige Index ausgewählt wird, der die Gesamtmetrik innerhalb des vorgegebenen Intervalls minimiert.

7. Verfahren nach einem der Ansprüche 1 bis 6, **dadurch gekennzeichnet, daß** das vorgegebene Intervall vom Rahmenaufbau des Datenstromes bestimmt wird.

**8.** Verfahren nach einem der Ansprüche 1 bis 7, **dadurch gekennzeichnet, daß** zur Schätzung der Frequenzablage die Phasendrehung von jeweils zwei benachbarten gleichartigen Signalabschnitten ermittelt wird.

**9.** Verfahren nach Anspruch 8, **dadurch gekennzeichnet, daß** die Phasendrehungen anderer gleichartiger Signalabschnitte ebenfalls ermittelt werden und die gesamte Frequenzablage durch Mittelung über die so gewonnenen Phasendrehungen geschätzt wird.

**10.** Verfahren nach einem der Ansprüche 1 bis 9, **dadurch gekennzeichnet, daß** die Symbolsequenzen zur Kanalschätzung für eine kohärente Demodulation herangezogen werden, indem die Symbolsequenz nach erfolgter Frequenzkorrektur im Empfänger einer FFT-Transformation (Fast Fourier Transformation) unterzogen werden und die Amplituden und Phasengewichte der einzelnen Unterträger bestimmt werden.

**11.** Verfahren nach Anspruch 10, **dadurch gekennzeichnet, daß** die Kanalparameter durch Mittelung über die verschiedenen Symbolsequenzen (A, B) geschätzt werden.

**12.** Verfahren nach einem der Ansprüche 1 bis 11, **dadurch gekennzeichnet, daß** der Synchronisationsfolge eine Präambel (P) vorangestellt wird, die insbesondere dazu vorgesehen ist, die Amplitudenregelung (GC) des Empfängers (E) einzustellen.

**13.** Kommunikationssystem mit einem Sender (S) zur Aufbereitung einer Synchronisationsfolge für mindestens einen Empfänger (E) zur Auswertung der Synchronisationsfolge innerhalb eines Übertragungssystems unter Verwendung eines Datenstromes mit Schutzintervallen insbesondere für den Ausgleich von Mehrwegeausbreitung mit folgenden senderseitigen Merkmalen:

    - einer digitalen Codier- bzw. Modulationseinrichtung (CM) für Sendesymbole auf mehrere Unterträger im Frequenzbereich,
    - einer Einblendeinrichtung (EB) für eine Synchronisationsfolge, die aus mindestens zwei verschiedenen Symbolsequenzen (A, B), gebildet wird, wobei die Einblendeinrichtung (EB) so ausgebildet ist, dass eine abwechselnd periodische Einfügung der Synchronisationsfolge in den von der Codier- bzw. Modulationseinrichtung (CM) aufbereiteten Datenstrom ausführbar ist,
    - einer mit der Einblendeinrichtung (EB) in Wirkverbindung stehenden Speichereinrichtung (SP) für die verschiedenen Symbolsequenzen bzw. deren Verknüpfung, sowie folgenden empfangsseitigen Merkmalen:
    - einem Abtastspeicher (AS) für einen empfangenen Datenstrom,
    - einer Synchronisationsauswerte-Einrichtung (SY) die mit dem Abtastspeicher (AS) in Wirkverbindung steht, und die geeignet ist, eine Synchronisationsfolge bestehend aus mindestens zwei verschiedenen Symbolsequenzen (A, B), die abwechselnd periodisch vom Sender (S) aussendbar sind, bezüglich der zeitlichen Lage und/oder Frequenzablage innerhalb eines vorgegebenen Intervalls auszuwerten und entsprechende Empfangseinheiten zur Blocksynchronisation (BS), Frequenzsynchronisation in einer Mischeinrichtung (FS) und/oder Kanalschätzung (KS) für eine Demodulation und Decodierung (DM) zu steuern.

**14.** Kommunikationssystem nach Anspruch 13, welches als Funkkommunikationssystem, leitergebundenes Kommunikationssystem oder als Hybridkommünikadonssystem, das heißt als Kommunikationssystem mit Funkkomponenten, Lichtwellenleiterkomponenten und/oder leitergebundenen Komponenten, ausgebildet ist und bei welchem Sender (S) und Empfänger (E) mit variablem Sende- und Empfangsbetrieb arbeiten.

**15.** Rundsendekommunikationssystem nach Anspruch 13, welches als Funkkommunikationssystem, leitergebundenes Kommunikationssystem oder als Hybridkommunikationssystem, das heißt als Kommunikatiotissystem mit Funkkomponenten, Lichtwellenleiterkomponenten und/oder leitergebundenen Komponenten ausgebildet ist, und bei welchem die Zuordnung von Sende- und Empfangsbetrieb für Sender (S) und Empfänger (E) fest vorgegeben ist.

**Claims**

**1.** Method for synchronization of one or more receivers to a transmitter within a transmission system using a data stream with guard intervals having the following features:

    - the transmitter (S) inserts a specific synchronization sequence into the data stream, in particular at the start of the transmission, which is suitable for estimating the timing of the signal to be received and/or the frequency offset between the transmitter (S) and the receiver (E),

- the synchronization sequence is formed from at least two different symbol sequences (A, B) which are transmitted alternately and periodically,

- the timing of the signal to be received and/or the frequency offset between the transmitter (S) and the receiver (E) are/is determined from a composite term of the various symbol sequences (A, B) within a predetermined interval,

- the overall metric of the at least two different symbol sequences used as the synchronization sequence is used for block synchronization, and that index which minimizes the overall metric within the predetermined interval is selected as the block start.

2. Method according to Claim 1, **characterized in that**, in the case of an OFDM transmission system, the symbol sequences (A, B) comprise OFDM symbols which have the same lengths as or different lengths from a normal data symbol.

3. Method according to Claim 1 or 2, **characterized in that** the symbol sequences (A, B) are each transmitted alternately, at least in pairs.

4. Method according to Claim 1 or 2, **characterized in that,** when there are more than two different symbol sequences, at least one symbol sequence is composed of a pair with an interval of at least one further pair of a different symbol sequence relating to the synchronization sequence.

5. Method according to Claim 3 or 4, **characterized in that** guard intervals are provided before the individual symbol sequence pairs (AA, BB, AA, ...).

6. Method according to one of Claims 1 to 3, **characterized in that** the overall metric of the symbol sequences used as the synchronization sequence is used for block synchronization, and that index which minimizes the overall metric within the predetermined interval is selected as the block start.

7. Method according to one of Claims 1 to 6, **characterized in that** the predetermined interval is governed by the frame structure of the data stream.

8. Method according to one of Claims 1 to 7, **characterized in that** the phase shift of between two respectively adjacent identical signal sections is determined in order to estimate the frequency offset.

9. Method according to Claim 8, **characterized in that** the phase shifts between other identical signal sections are likewise determined, and the overall frequency offset is estimated by averaging over the phase shifts obtained in this way.

10. Method according to one of Claims 1 to 9, **characterized in that** the symbol sequences for channel estimation are used for coherent demodulation **in that**, after frequency correction has been carried out in the receiver, the symbol sequence is subjected to FFT (Fast Fourier Transformation), and the amplitudes and phase weightings of the individual sub-carriers are determined.

11. Method according to Claim 10, **characterized in that** the channel parameters are estimated by averaging over the various symbol sequences (A, B).

12. Method according to one of Claims 1 to 11, **characterized in that** the synchronization sequence is preceded by a preamble (P) which is intended in particular for setting the amplitude control (GC) for the receiver (E).

13. Communication system having a transmitter (S) for pre-processing a synchronization sequence for at least one receiver (E) for evaluating the synchronization sequence within a transmission system using a data stream with guard intervals, in particular in order to compensate for multipath propagation, having the following transmitter-end features:

- a digital coding and modulation device (CM) for transmission symbols on a plurality of sub-carriers in the frequency domain,

- an overlaying device (EB) for a synchronization sequence which is formed from at least two different symbol sequences (A, B), wherein the overlaying device (EB) is designed such that the synchronization sequence can be inserted alternately and periodically into the data stream which has been pre-processed by the coding and modulation device (CM),
- a memory device (SP), which is operatively connected to the overlaying device (EB), for the various simple sequences and their logic links, as well as the following receiving-end features:
- a sampling memory (AS) for a received data stream,
- a synchronization evaluation device (SY) which is operatively connected to the sampling memory (AS) and is suitable for evaluating a synchronization sequence comprising at least two different symbol sequences (A, B), which can be transmitted alternately and periodically by the transmitter (S), with respect to the timing and/or frequency offset within a predetermined interval, and for controlling corresponding receiving units for block synchronization (BS), frequency synchronization in a mixing device (FS) and/or channel estimation (KS) for demodulation and decoding (DM).

**14.** Communication system according to Claim 13, which is in the form of a radio communication system, conductor-based communication system or a hybrid communication system, that is to say it is in the form of a communication system with radio components, optical waveguide components and/or conductor-based components, and in which the transmitter (S) and the receiver (E) operate with a variable transmission and reception mode.

**15.** Broadcast transmission communication system according to Claim 13, which is in the form of a radio communication system, conductor-based communication system or a hybrid communication system, that is to say it is in the form of a communication system with radio components, optical waveguide components and/or conductor-based components, and in which the association between the transmission and reception modes for the transmitter (S) and receiver (E) is permanently predetermined.

**Revendications**

**1.** Procédé de synchronisation d'un ou plusieurs récepteurs par rapport à un émetteur dans un système de transmission par recours à un flux de données doté d'intervalles de protection, le procédé présentant les étapes suivantes :

- en particulier au début de l'émission, l'émetteur (S) insère dans le flux de données une succession spéciale de synchronisation qui permet en particulier d'estimer la position temporelle du signal à recevoir et/ou le décalage de fréquence entre l'émetteur (S) et les récepteurs (E),
- la succession de synchronisation est formée d'au moins deux séquences de symboles différentes (A, B) qui sont émises périodiquement en alternance,
- la position temporelle du signal à recevoir et/ou le décalage de fréquence entre l'émetteur (S) et le récepteur (E) sont déterminés à partir d'un terme qui associée les différentes séquences de symboles (A, B) à l'intérieur d'un intervalle prédéterminé,
- pour obtenir une synchronisation par blocs, la métrique totale des deux ou plusieurs séquences différentes de symboles utilisées comme succession de synchronisation est prise en compte et l'index qui minimise la métrique totale à l'intérieur d'un intervalle prédéterminé est sélectionné comme début du bloc.

**2.** Procédé selon la revendication 1, **caractérisé en ce que** dans un système de transmission OFDM, les séquences de symboles (A, B) sont constituées de symboles OFDM qui ont une longueur identique à celle d'un symbole de données habituel ou différente de celle-ci.

**3.** Procédé selon les revendications 1 ou 2, **caractérisé en ce que** les séquences de symboles (A, B) sont émises au moins par paires et en alternance.

**4.** Procédé selon les revendications 1 ou 2, **caractérisé en ce que** lorsqu'il y a plus de deux séquences de symboles différentes, au moins une séquence de symboles est rassemblée sous la forme d'une paire située à distance d'au moins une autre paire d'une autre séquence de symboles pour former la succession de synchronisation.

**5.** Procédé selon les revendications 3 ou 4, **caractérisé en ce que** des intervalles de protection sont prévus entre les différentes paires de séquences de symboles (AA, BB, AA, ...).

**6.** Procédé selon l'une des revendications 1 à 5, **caractérisé en ce que** dans une synchronisation par blocs, la métrique totale des séquences de symboles utilisée comme succession de synchronisation est prise en compte et l'index qui minimise la métrique totale à l'intérieur de l'intervalle prédéterminé est sélectionné comme début de bloc.

**7.** Procédé selon l'une des revendications 1 à 6, **caractérisé en ce que** l'intervalle prédéterminé est défini par la structure de trame du flux de données.

**8.** Procédé selon l'une des revendications 1 à 7, **caractérisé en ce que** l'angle de phase entre deux parties identiques voisines du signal est déterminé pour estimer le décalage de fréquence.

**9.** Procédé selon la revendication 8, **caractérisé en ce que** les angles de phase entre d'autres parties identiques de signal sont également déterminés et **en ce que** le décalage total en fréquence est estimé par formation de la moyenne des angles de phase ainsi déterminés.

**10.** Procédé selon l'une des revendications 1 à 9, **caractérisé en ce que** les séquences de symboles pour l'estimation des canaux sont utilisées pour une démodulation cohérente en faisant subir à la séquence de symboles une transformation rapide de Fourier (FFT) après correction de la fréquence dans le récepteur et **en ce que** les amplitudes et pondérations de phase des différentes sous-porteuses sont déterminées.

**11.** Procédé selon la revendication 10, **caractérisé en ce que** les paramètres des canaux sont estimés par formation d'une valeur moyenne sur les différentes séquences de symboles (A, B).

**12.** Procédé selon l'une des revendications 1 à 11, **caractérisé en ce que** la succession de synchronisation est précédée d'un préambule (P) prévu en particulier pour régler la régulation d'amplitude (GC) du récepteur (E).

**13.** Système de communication doté d'un émetteur (S) qui prépare une succession de synchronisation pour au moins un récepteur (E) en vue d'évaluer la succession de synchronisation à l'intérieur d'un système de transmission par recours à un flux de données doté d'intervalles de protection, en particulier pour la compensation de la propagation multiparcours, avec les caractéristiques suivantes du côté de l'émetteur :

- un dispositif numérique de codage et de modulation (CM) de symboles d'émission sur plusieurs sous-porteuses dans la plage de fréquences,
- un dispositif (EB) d'insertion d'une succession de synchronisation formée d'au moins deux séquences de symboles différentes (A, B), le dispositif d'insertion (EB) étant configuré de manière à pouvoir réaliser une insertion périodique alternée de la succession de synchronisation dans le flux de données préparé par le dispositif de codage et de modulation (CM),
- un dispositif de mémoire (SP) pour les différentes séquences de symboles et leur association, qui coopère avec le dispositif d'insertion (EB),
ainsi que les caractéristiques suivantes du côté du récepteur :
- une mémoire d'échantillonnage (AS) d'un flux de données reçu,
- un dispositif (SY) d'évaluation de synchronisation qui coopère avec la mémoire d'échantillonnage (AS) et qui permet d'évaluer la position temporelle et/ou le décalage de fréquence à l'intérieur d'un intervalle prédéterminé d'une succession de synchronisation constituée d'au moins deux séquences de symboles différentes (A, B) qui peuvent être émises périodiquement et en alternance par l'émetteur (S) et de commander des unités correspondantes de réception pour la synchronisation des blocs (BS), la synchronisation en fréquence dans un dispositif de mixage (FS) et/ou l'estimation des canaux (KS) pour la démodulation et le décodage (DM).

**14.** Système de communication selon la revendication 13, configuré comme système de communication radio, système de communication par fil ou système de communication hybride, c'est-à-dire système de communication présentant des composantes radio, des composantes à conducteurs d'ondes lumineuses et/ou des composantes filaires, et dans lequel des émetteurs (S) et des récepteurs (E) travaillent en fonctionnant en émission ou en réception de manière variable.

**15.** Système de communication bidirectionnelle selon la revendication 13, configuré comme système de communication radio, système de communication filaire ou système de communication hybride, c'est-à-dire système de communication présentant des composantes radio, des composantes à conducteurs d'ondes lumineuses et/ou des composantes filaires, dans lequel l'attribution du fonctionnement en émission ou en réception aux émetteurs (S) et aux récepteurs (E) est prédéterminée de manière fixe.

## Fig.1

E1

E2

E3

S

## Fig.2

N

N

A

P

A

## Fig.3

$$L_2 = k\,L_1; k\varepsilon\,\{2,4,6...\}$$

| $A_1$ | $A_2$ | $B_1$ | $B_2$ | $A_3$ | $A_4$ | $B_3$ | $B_4$ | ... |

$L_1$

## Fig.4

| Präambel | $A_1$ | $A_2$ | $B_1$ | $B_2$ | $A_3$ | $A_4$ |

Präambel

## Fig.5

10100011 → | Codierung/ Modulation | (CM) → | IFFT | → | P/S | → | periodische Fortsetzung | (SI) → | Einfügen Synch.folge | (EB) ← | Speicher Synch.folge | (SP) → | D/A | → | Sende-Fronted | → Y

## Fig.6

10100011 ← | Demodulat. Decodierung | (DM) ← | FFT | ← | S/P | ← ⊗ (FS) ← | | (BS) ← | | (AS) ← $(r_1)$ | A/D | ← | Empfangs-Fronted | ← Y

$e^{-2\pi \hat{f}_0/f_a}$

$\hat{i}_{start}$

Blocksynchr.

Frequenz-synchr.

Kanal-schätzung

Synchronisation — SY

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5732113 A
- WO 9602990 A

**In der Beschreibung aufgeführte Nicht-Patentliteratur**

- **W. Zou ; Y.Wu.** COFDM: an Overview. *IEEE Transactions on Broadcasting,* Marz 1995, vol. 41 (1
- **Chevillat, P.R. ; Mainwald, D ; Ungerboeck, G.** Rapid Training of a Voiceband Data-Modem Receiver Employing an Equalizer with Fractional-T Spaced Coefficients. *IEEE Trans.on Communications,* 1987, vol. 35 (9), 869-876
- **Müller-Weinfurtner, S.H.** On the Optimality of Metrics for Coarse Frame Synchronization in OFDM a Comparison. *9th IEEE PIMRC'98,* 1998
- **Müller-Weinfurtner, S.H. ; Rößler, J.F. ; Huber, J.B.** Analysis of a Frame- and Freguency Synchronizer for Bursty OFDM. *Proceedings of the 7th CTMC at IEEE Globecom '98,* 1998, 201-206